# EUROPÄISCHE PATENTSCHRIFT

(11) **EP 2 048 056 B1**
(45) Veröffentlichungstag und Bekanntmachung des Hinweises auf die Patenterteilung: **11.01.2012**
(21) Anmeldenummer: 08017515.1
(22) Anmeldetag: 06.10.2008
(51) Int. Cl.: B62B 3/00, B62B 3/14

(54) **Stapelbarer Transportwagen**
Stackable transport trolley
Chariot de transport emboîtable

(30) Priorität: 08.10.2007 DE 202007014033 U
(43) Veröffentlichungstag der Anmeldung: 15.04.2009
(73) Patentinhaber: Wanzl Metallwarenfabrik GmbH, 89336 Leipheim (DE)
(72) Erfinder: Acikgöz, Ayhan, 89312 Günzburg (DE); Eichele, Hermann, 89340 Leipheim (DE)

(56) Entgegenhaltungen:
- EP-A1- 0 010 068
- EP-A1- 0 429 825
- US-A- 5 192 092
- US-B1- 6 203 035

## Beschreibung

Die Erfindung betrifft einen stapelbaren Transportwagen nach dem Oberbegriff des Patentanspruchs 1 der Anmeldung. Ein derartiger stapelbarer Transportwagen wird von der US 6,203,035 B1 gezeigt.

Aus dem europäischen Patent 1 231 125 B1 ist ein Wagen mit einer horizontalen Ablage bekannt. Anwendung findet ein solcher Wagen beispielsweise an Raststätten. Dieser Wagen sieht weiterhin eine Sitzeinrichtung für ein Kind vor. Wegen des Kindersitzes ist die Ablagefläche begrenzt.

Die Aufgabe der Erfindung besteht nun darin, einen verbesserten Transportwagen mit einer größeren Ablagefläche aufzuzeigen.

Die Erfindung löst die Aufgabe mit den Merkmalen im Hauptanspruch.

Die Notwendigkeit an Wagen mit Kindersitzen ist begrenzt, daher wird ein Wagen ohne Kindersitz vorgeschlagen.

Durch mehrere parallel zueinander positionierte, horizontale Ablagen ist eine größere Ablagefläche gegeben.

Die Erfindung wird anhand eines Ausführungsbeispiels näher erläutert. Es zeigt
- Fig. 1: einen Transportwagen mit mehreren Ablagen in 3-D-Ansicht;
- Fig. 2: den gleichen Transportwagen mit mehreren Ablagen in Seitenansicht;
- Fig. 3: den gleichen Transportwagen in Rückansicht, sowie
- Fig. 4: den gleichen Transportwagen in Draufsicht.

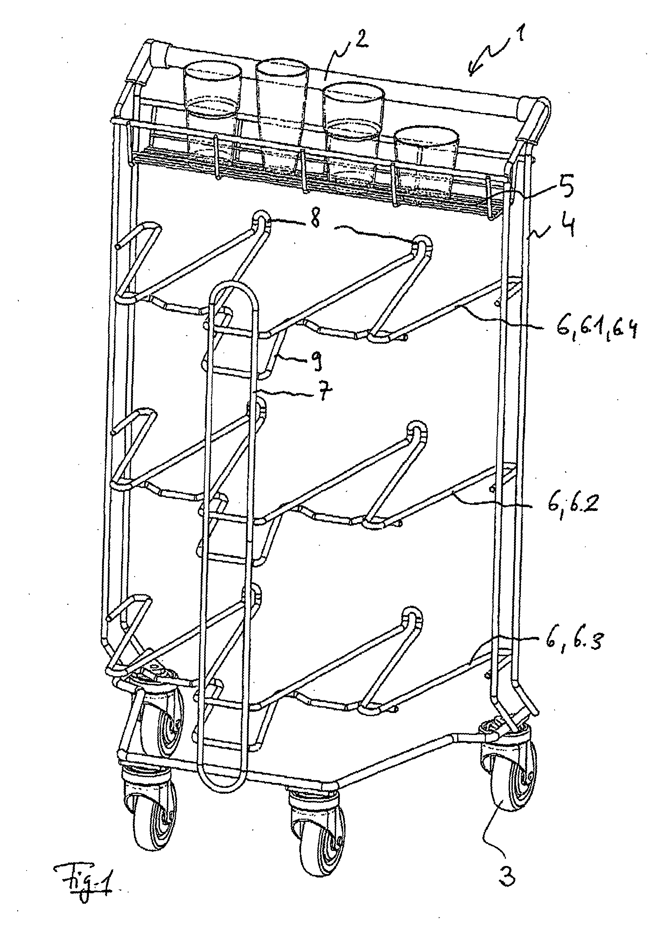

Die Erfindung betrifft einen stapelbaren Transportwagen 1, wie er in Figur 1 gezeigt ist Er weist eine Schiebeeinrichtung 2 und ein Gestell 4 auf. Am Gestell 4 ist rückseitig ein Korb 5 angeordnet. Dieser dient zum Abstellen von Gegenständen wie z.B. Gläsern.

Weiterhin sind am Gestell 4 ortsfeste, horizontale Ablagen 6 angeordnet, die das Abstellen eines nicht näher dargestellten Tabletts ermöglichen. Es sind drei Ablagen 6, eine obere Ablage 6.1, eine mittlere Ablage 6.2 und eine untere Ablage 6.3 am Gestell 4 ortsfest angeordnet. Zwischen den Ablagen 6 ist ein Abstand vorgesehen. Der Abstand zwischen der mittleren Ablage 6.2 und der unteren Ablage 6.3 entspricht dem Abstand zwischen der mittleren Ablage 6.2 und der oberen Ablage 6.1.

Jede Ablage 6 ist aus einem horizontalen Draht 6.4 oder mehreren horizontalen Drähten 6.4 gebildet. Der Draht 6.4 ist derart gebogen, dass eine sichere Ablagefläche für jedes Tablett gegeben ist.

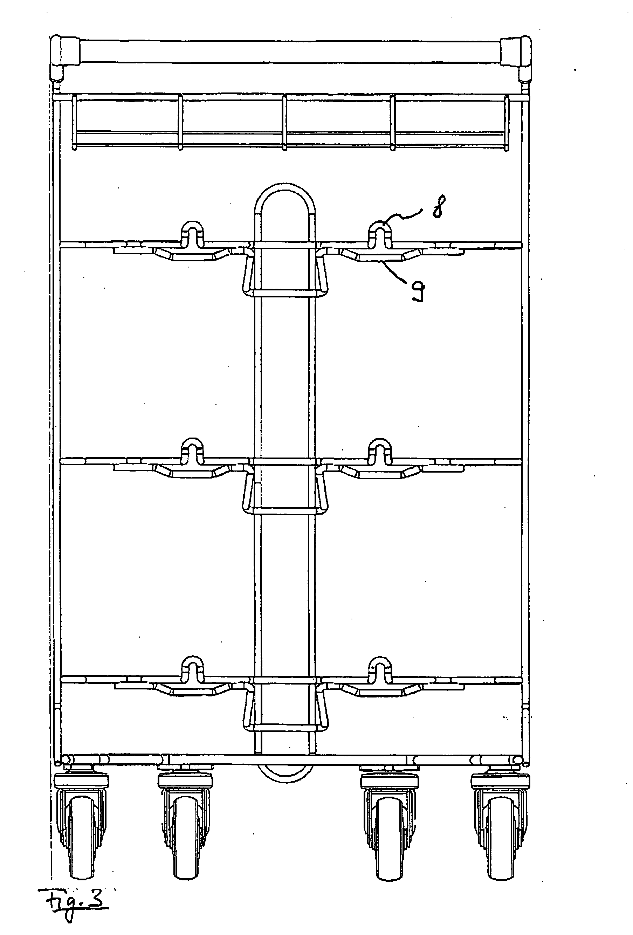

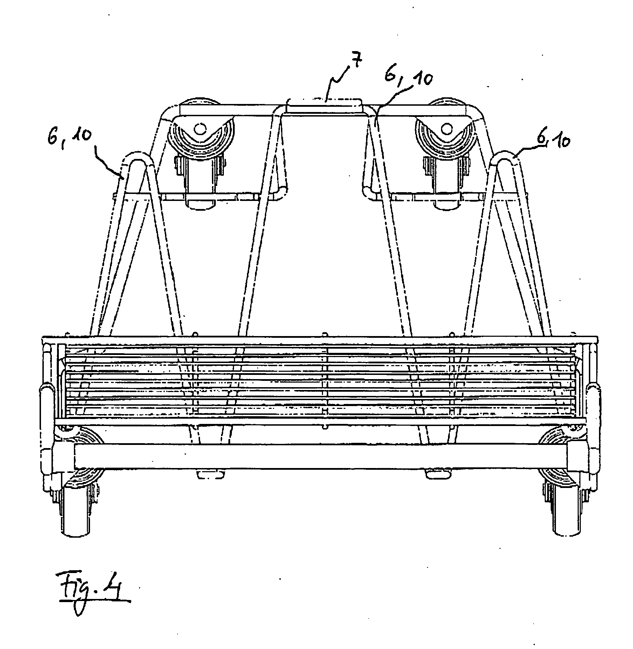

Wie in den Figuren 1 und 3 dargestellt, sind alle Ablagen 6 miteinander verbunden. Hierfür sind alle Ablagen 6.1 bis 6.3 mittels wenigstens eines senkrechten Verbindungsteiles 7 ortsfest miteinander verbunden. Wie aus Figur 4 zu entnehmen ist, ist die Ablage 6 aus drei Zacken 10 gebildet, wobei die mittlere ortsfest am senkrechten Verbindungsteil 7 angeordnet ist.

Zur Stabilisierung und Sicherung ist das Verbindungsteil 7 am unteren Teil des Gestells 4 ortsfest angeordnet.

Jede Ablage 6 weist weiterhin Haltemittel 8 auf. Diese dienen dazu, dass ein Verrutschen oder ein Herunterfallen des Tabletts unterbunden wird. Weiterhin besteht die Möglichkeit, einen Beutel oder eine Tüte anzuhängen.

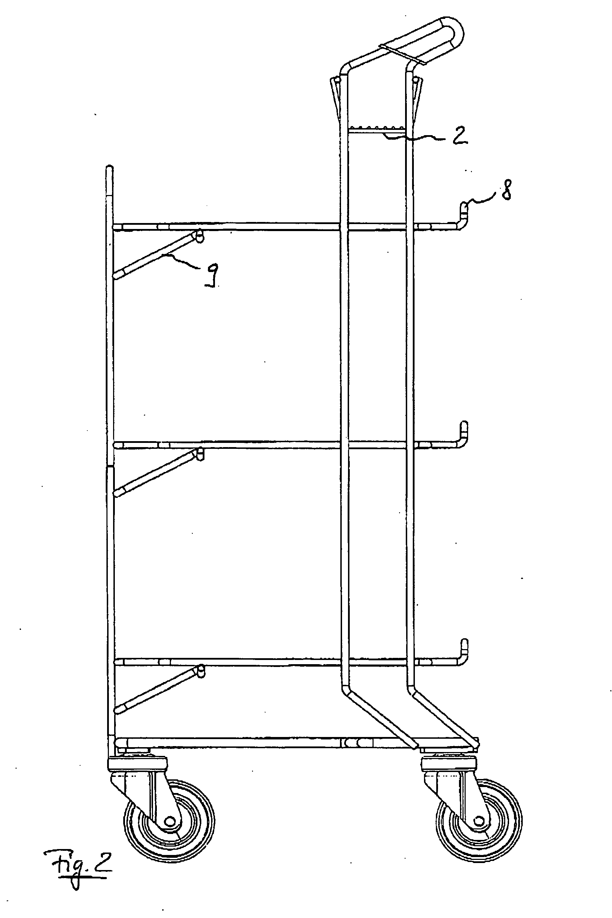

Jedes Haltemittel 8 ist wie in Figur 2 dargestellt - mit einer aus dem Draht gebildeten Schlaufe versehen. Die Schlaufe ist nach oben gebogen. Die Anzahl der Haltemittel 8 ist abhängig von der Anzahl der Zacken 10.

Jede Ablage 6 weist eine Stabilisierungshilfe 9 auf. Diese ist - wie aus Figur 2 zu entnehmen, unterhalb jeder Ablage 6 ortsfest angeordnet und verbindet jeweils die Ablage 6 mit dem senkrechten Verbindungsteil 7.

### Bezugszeichenliste

- 1: Transportwagen
- 2: Schiebeeinrichtung
- 3: Rolle
- 4: Gestell
- 5: Korb
- 6: Ablage
- 6.1: obere Ablage
- 6.2: mittlere Ablage
- 6.3: untere Ablage
- 7: senkrechtes Verbindungsteil
- 8: Haltemittel
- 9: Stabilisierungshilfe
- 10: Zacken

## Patentansprüche

1. Stapelbarer Transportwagen mit einer Schiebeeinrichtung (2), einem mit Rollen (3) versehenen Gestell (4) und einem rückseitig am Gestell (4) angeordneten Korb (5), wobei am Gestell (4) mehrere Ablagen (6) angeordnet sind, die das Abstellen eines Tabletts ermöglichen, wobei jede Ablage (6) aus einem horizontalen Draht (6.4) gebildet ist, und wobei drei Ablagen (6), eine obere Ablage (6.1), eine mittlere Ablage (6.2) und eine untere Ablage (6.3) am Gestell (4) angeordnet sind, wobei alle Ablagen (6.1, 6.2, 6.3) mittels wenigstens eines senkrechten Verbindungsteiles (7) miteinander verbunden sind, und wobei ferner das Verbindungsteil (7) am Gestell (4) ortsfest angeordnet ist, **dadurch gekennzeichnet, dass** jede Ablage (6) aus drei Zacken (10) gebildet ist, wobei jeweils die mittlere Zacke (10) ortsfest am senkrechten Verbindungsteil (7) angeordnet ist, und wobei jede Ablage (6), um ein Verrutschen oder ein Herunterfallen eines Tabletts zu verhindern, jeweils Haltemittel (8) aufweist, die aus einer Schlaufe gebildet sind.

2. Transportwagen nach Anspruch 1, **dadurch gekennzeichnet, dass** die Schlaufe nach oben gebogen ist.

3. Transportwagen nach den Ansprüchen 1 und 2, **dadurch gekennzeichnet, dass** je Ablage zwei Haltemittel (8) vorgesehen sind.

4. Transportwagen nach einem der vorhergehenden Ansprüche, **dadurch gekennzeichnet, dass** der Abstand zwischen der mittleren Ablage (6.2) und der unteren Ablage (6.3) dem Abstand zwischen der mittleren Ablage (6.2) und der oberen Ablage (6.1) entspricht.

5. Transportwagen nach einem der vorhergehenden Ansprüche, **dadurch gekennzeichnet, dass** jede Ablage (6) eine Stabilisierungshilfe (9) aufweist.

## Claims

1. A nestable trolley having a pushing arrangement (2), a frame (4) provided with castors (3) and a basket (5) arranged on the rear of the frame (4), wherein on the frame (4) there are arranged a plurality of racks (6) enabling the depositing of a tray, wherein rack (6) is formed of a horizontale wire (6, 4), and wherein three racks (6), an upper rack (6.1), a middle rack (6.2) and a lower rack (6.3), are arranged on the frame (4), wherein all racks (6.1, 6.2, 6.3) are connected to one another by means of at least one perpendicular connecting part (7), and wherein furthermore the connecting part (7) is fixedly arranged on the frame (4), **characterised in that** rack (6) is formed of three prongs (10), wherein in each case the middle prong (10) is fixedly arranged on the perpendicular connecting part (7), and wherein in order to prevent slipping or falling off of a tray, each rack (6) has in each holding means (8) formed of a loop.

2. A trolley according to claim 1, **characterised in that** the loop is bent upwards.

3. A trolley according to claims 1 and 2, **characterised in that** two holding means (8) per rack are provided.

4. A trolley according to any one of the preceding claims, **characterised in that** the distance between the middle rack (6.2) and the lower rack (6.3) corresponds to the distance between the middle rack (6.2) and the upper rack (6.1).

5. A trolley according to any one of the preceding claims, **characterised in that** each rack (6) has a stabilisation aid (9).

## Revendications

1. Chariot de transport du type imbricable, comprenant un dispositif de poussée (2), un châssis (4) pourvu de roulettes (3) et un panier (5) placé à l'arrière dudit châssis (4), lequel châssis (4) comporte plusieurs éléments d'appui (6) autorisant le dépôt d'une tablette, chaque élément d'appui (6) étant constitué d'une baguette métallique horizontale (6.4), et le châssis (4) comptant trois éléments d'appui (6) se présentant comme un élément d'appui (6.1) supérieur, un élément d'appui (6.2) médian et un élément d'appui (6.3) inférieur, sachant que tous les éléments d'appui (6.1, 6.2, 6.3) sont reliés les uns aux autres à l'aide d'au moins une partie verticale de liaison (7) et sachant, en outre, que ladite partie de liaison (7) occupe une position fixe sur le châssis (4), **caractérisé par le fait que** chaque élément d'appui (6) est formé de trois fourchons (10), le fourchon central (10) occupant, à chaque fois, une position fixe sur la partie verticale de liaison (7) et chaque élément d'appui (6) étant respectivement muni, en vue de prévenir le ripage ou la chute d'une tablette, de moyens de retenue (8) formés d'une boucle.

2. Chariot de transport selon la revendication 1, **caractérisé par le fait que** la boucle est cintrée vers le haut.

3. Chariot de transport selon les revendications 1 et 2, **caractérisé par le fait que** deux moyens de retenue (8) sont prévus pour chaque élément d'appui.

4. Chariot de transport selon l'une des revendications précédentes, **caractérisé par le fait que** la distance, comprise entre l'élément d'appui (6.2) médian et l'élément d'appui (6.3) inférieur, correspond à la distance comprise entre ledit élément d'appui (6.2) médian et l'élément d'appui (6.1) supérieur.

5. Chariot de transport selon l'une des revendications précédentes, **caractérisé par le fait que** chaque élément d'appui (6) présente un auxiliaire de stabilisation (9).
